# EUROPÄISCHE PATENTSCHRIFT

(11) **EP 0 837 344 B1**
(45) Veröffentlichungstag und Bekanntmachung des Hinweises auf die Patenterteilung: **19.02.2003**
(21) Anmeldenummer: 97117143.4
(22) Anmeldetag: 02.10.1997
(51) Int. Cl.: G01V 3/12

(54) **Verfahren und Vorrichtung zur Detektion eines metallischen Objektes**
Method and apparatus for detection of metallic objects
Procédé et dispositif pour la détection d'objets métalliques

(30) Priorität: 16.10.1996 DE 19642748
(43) Veröffentlichungstag der Anmeldung: 22.04.1998
(73) Patentinhaber: FIRMA ING. KLAUS EBINGER, D-51149 Köln (DE)
(72) Erfinder: Ebinger, Klaus, Ing., 51143 Köln (DE)
(74) Vertreter: Heim, Hans-Karl, Dipl.-Ing.

(56) Entgegenhaltungen:
- EP-A- 0 249 110
- CH-A- 676 051
- GB-A- 2 075 199
- GB-A- 2 153 077
- US-A- 3 988 663
- US-A- 4 433 528
- US-A- 4 719 426

## Beschreibung

Die Erfindung betrifft ein Verfahren zur Detektion eines metallischen Objekts, insbesondere eines Drahtes. Weiterhin betrifft die Erfindung eine Vorrichtung zur passiven Detektion eines metallischen Objekts, insbesondere eines Drahtes, mit Empfangsschleifen und einer nachgeschalteten Auswerteelektronik.

Dabei ist unter einem Draht ein längliches metallisches Objekt oder ein Drahtmuster zu verstehen, welches in der Lage ist, elektromagnetische Schwingungen abzustrahlen.

Aus der DE 43 26 030 ist bereits ein Verfahren zur Detektion von dünnen Litzen und Drähten bekannt. Dabei wird mit einem aktiven Suchverfahren eine Folge kurzer steilflankiger Pulse abgegeben und die durch die Pulse induzierten Sekundärsignale zur Detektion des Drahtes ausgewertet.

Aus der DE 27 21 690 und der DE 27 26 972 sind vergleichbare Verfahren bekannt, bei denen ein gewobbelter Sender verwendet wird, um mit dem Sendesignal die Eigenfrequenz des zu detektierenden Objekts zu treffen und dieses zu einer Schwingung anzuregen.

Ein Problem bei den bisher bekannten Drahtsuchverfahren ist daher zum einen der relativ große technische Aufwand, der zum Erzeugen eines durchgewobbelten Primärsignals notwendig ist und zum anderen die dazu nötige Zeitspanne. Das Wobbeln selbst ist nämlich mit einem Zeitfaktor verbunden und außerdem braucht man mehrere Wobbel-Hübe über das Suchobjekt, um es soweit zu erregen, daß sich ein detektierbares Sekundärfeld ergibt.

Aus der GB-A-2 075 199 ist eine Vorrichtung zur Detektion metallischer Objekte bekannt. Bei dieser bekannten Vorrichtung sind zwei vertikal übereinander angeordnete Detektionsschleifen vorgesehen, die mit einer Auswerteeinheit verbunden sind und an diese Detektionssignale übertragen. Um fehlerhafte Auswertungen zu vermeiden, wird nur dann von der Auswerteeinheit ein Audiosignal als Hinweis auf ein detektiertes metallisches Objekt erzeugt, wenn der Signalabstand zwischen den beiden Detektionssignalen ausreichend groß ist.

Der Erfindung liegt daher die **Aufgabe** zugrunde, ein Verfahren zur Detektion eines metallischen Objekts, insbesondere eines Drahtes, zu schaffen, mit dem auf besonders einfache Art und Weise metallische Objekte und insbesondere Drähte passiv detektiert werden können. Weiterhin liegt der Erfindung die Aufgabe zugrunde, eine Vorrichtung der eingangs genannten Art zur Detektion von metallischen Objekten zu schaffen, die besonders einfach aufgebaut ist.

Die Lösung dieser Aufgabe erfolgt durch ein Verfahren, mit den Merkmalen des Anspruchs 1. Vorrichtungsmäßig erfolgt die Lösung der Aufgabe mit den Merkmalen der Ansprüche 7 und 10. Vorteilhafte Weiterbildungen der Erfindung sind in den abhängigen Ansprüchen beschrieben.

Insbesondere wird ein Verfahren geschaffen, bei dem von dem metallischen Objekt unter Nutzung einer vorhandenen HF-Hintergrundstrahlung ein Spektrum hoher Frequenzen empfangen und abgestrahlt wird, wobei die von dem metallischen Objekt abgestrahlten hohen Frequenzen mit mindestens zwei Empfangsschleifen detektiert werden und aus den von den Empfangsschleifen empfangenen Signalen zur Störsignalunterdrückung ein Differenzsignal gebildet wird und das hochfrequente Differenzsignal ausgewertet und zur Anzeige gebracht wird.

Von besonderer Bedeutung sind dabei der passive Charakter des Verfahrens und die Nutzung der hochfrequenten Hintergrundstrahlung. Das metallische Objekt bildet ein Sekundärfeld aus, das aus einer Vielzahl von Einzelfrequenzen besteht. Diese Einzelfrequenzen werden durch hochfrequente Signale hervorgerufen, die von einer Vielzahl von Sendern ausgestrahlt werden und auf dem Objekt eine Spannung induzieren. Beispielsweise kann die HF-Hintergrundstrahlung von Hochspannungsleitungen und von elektrischen Geräten erzeugt werden.

In einer bevorzugten Ausbildung der Erfindung wird das hochfrequente Differenzsignal gleichgerichtet und ein daraus erzeugtes Gleichspannungssignal zur Anzeige gebracht. Dem so erzeugten Spannungswert kann entweder eine bestimmte Tonfrequenz oder ein bestimmtes optisches Signal zugeordnet werden, so daß der Anwender des Verfahrens eine leicht wahrnehmbare und deutliche Anzeige über das zu detektierende metallische Objekt erhält. Alternativ kann dem hochfrequenten Differenzsignal mindestens eine hohe Frequenz beigemischt werden, so daß eine niederfrequente Schwebung entsteht, und die niederfrequente Schwebung zur Anzeige gebracht werden. Bei dieser Ausführungsform ist es besonders vorteilhaft, die hohe Frequenz, die beigemischt wird, mit einem Wobbelgenerator zu erzeugen, so daß immer die richtige Frequenz zur Erzeugung einer gut darstellbaren und wahrnehmbaren Schwebung bereitsteht. Mit jedem Wobbelhub werden sich dabei Töne ergeben, die von der jeweiligen Frequenz abhängig sind. Anstelle eines Wobbelgenerators kann auch ein Rechteckgenerator verwendet werden, der eine Vielzahl von Frequenzen erzeugt.

Bevorzugt wird das ausgewertete Differenzsignal mit einer akustischen Anzeige dargestellt, da der Anwender des Verfahrens in der Regel Handgeräte verwendet und diese manuell und visuell führen muß. In manchen Fällen ist jedoch auch eine optische Anzeige sinnvoll, wobei eine Visualisierung der Daten mit einem Computer insbesondere dann zur Anwendung kommt, wenn zur Detekion eines Objekts in einem definierten Bereich, dieser definierte Bereich abgescannt wird und die aufgenommenen Differenzsignale abgespeichert und dargestellt werden sollen.

In geschlossenen Räumen, die durch Stahlkonstruktionen abgeschirmt sind, ist eine HF-Hintergrundstrahlung nicht im erforderlichen Ausmaß vorhanden. Das erfindungsgemäße Verfahren kann daher so weitergebildet werden, daß ein zusätzlicher HF-Sender zur Erzeugung der HF-Hintergrundstrahlung innerhalb eines Empfangsbereichs des metallischen Objekts betrieben wird. Dabei werden Frequenzen in einem Frequenzbereich von 500 kHz bis 250 MHz erzeugt. Ein solcher Sender kann mit einer Leistung von etwa 10 mW betrieben werden. In einer Weiterbildung der Erfindung wird die vom HF-Sender erzeugte HF-Hintergrundstrahlung mit einer beliebigen Frequenz moduliert, so daß man die bei der Auswertung beigemischte hohe Frequenz so wählen kann, daß sich ein gut hörbares Niederfrequenzsignal ergibt. Auch eine Modulation unter 100 Hz ist möglich, jedoch wird dabei dann der Anzeigeton ebenfalls hörbar moduliert.

Vorrichtungsmäßig wird die Aufgabe dadurch gelöst, daß mindestens zwei Empfangsschleifen vorhanden sind, mit denen ein vom Objekt abgestrahltes Spektrum hoher Frequenzen detektierbar ist, wobei die zwei Empfangsschleifen in Differenz geschaltet sind und zur Verstärkung eines so gebildeten Differenzsignal ein Hochfrequenzverstärker vorhanden ist. Weiterhin ist dem Hochfrequenzverstärker ein Hochfrequenzgleichrichter nachgeordnet, mit dem ein Gleichspannungssignal erzeugbar ist. Auch ist eine Schaltung zur Signalumsetzung vorhanden, die dem Gleichspannungssignal ein akustisches und/oder optisches Signal zuordnet.

Mit einer solchen passiven Schaltung wird eine besonders einfache Schaltung erreicht, bei der kein Primärsignal ausgesendet werden muß und mit der eine besonders empfindliche Detektion von metallischen Objekten und insbesondere von Drähten und Litzen möglich ist.

In einer Weiterbildung der Erfindung ist dem Hochfrequenzgleichrichter zur Verstärkung des Gleichspannungssignals ein Gleichspannungsverstärker nachgeordnet. Weiterhin weist die Schaltung zur Signalumsetzung bevorzugt eine mit einem Potentiometer verbundene Tonumsetzung und eine akustische Anzeigeeinrichtung auf.

In einer alternativen erfindungsgemäßen Ausführung weist die Vorrichtung zur passiven Detektion eines metallischen Objekts mindestens zwei Empfangsschleifen auf, mit denen ein vom Objekt abgestrahltes Spektrum hoher Frequenzen detektierbar ist, wobei die zwei Empfangsschleifen in Differenz geschaltet sind, zur Verstärkung eines so gebildeten Differenzsignals ein Hochfrequenzverstärker vorhanden ist, eine Mischstufe zur Überlagerung des verstärkten Hochfrequenzsignals mit mindestens einer weiteren hohen Frequenz zur Erzeugung einer niederfrequenten Schwebung vorhanden ist und eine akustische und/oder optische Anzeigevorrichtung vorhanden ist.

Bei dieser alternativen Ausführung wird die Meßstufe bevorzugt von einem Wobbelgenerator beaufschlagt. Auch der Einsatz eines Rechteckgenerators ist denkbar. Weiterhin wird günstigerweise ein Niederfrequenzverstärker zur Verstärkung der Schwebung eingesetzt.

Bei beiden erfindungsgemäßen Lösungen sind die Empfangsschleifen bevorzugt acht-förmig angeordnet und weisen einen gemeinsamen Massepunkt auf. Auch geschirmte, koaxiale Leiterschleifen können Verwendung finden. Im ürigen ist die Konfiguration der Schleifen nahezu beliebig, so lange eine differenzierende Schaltung aufgebaut werden kann, mit der das HF-Hintergrundsignal als bei der eigentlichen Messung störendes Signal subtrahiert werden kann. Die Empfangsschleifen sind bevorzugt als Breitbandempfänger ausgelegt, so daß ein hochfrequentes Frequenzgemisch empfangen werden kann.

In den beiden erfindungsgemäßen Lösungen sind die zwei Empfangsschleifen in Differenz geschaltet und zur Verstärkung des dabei gebildeten Differenzsignals ist ein Hochfrequenzverstärker vorhanden. Dies kann einerseits mechanisch durch die Ausrichtung und Anordnung der Empfangsschleifen zueinander erreicht werden. Dazu ist beispielsweise eine achtförmige Konfiguration geeeignet, in der die Empfangsschleifen gegensinnig geschaltet sind. Andererseits ist auch eine elektronische Differenzbildung möglich, bei der die Empfangsschleifen gleichsinnig geschaltet sind und die von den Empfangsschleifen empfangenen Signale auf einen Hochfrequenzverstärker mit Differenzwirkung, einen sogenannten Differenzverstärker mit Plus/Minus-Eingang, gegeben werden.

In einer anderen Ausgestaltung der Erfindung ist hinter dem Hochfrequenzverstärker zur Verstärkung des Differenzsignals ein zweiter Hochfrequenzverstärker angeschlossen, der günstigerweise mit einem logarithmischen Dynamikbereich ausgebildet ist. Dadurch wird erreicht, daß bei starken Empfangssignalen die restliche Auswertung nicht in den Sättigungsbereich gelangt.

Bevorzugt weist die Vorrichtung einen HF-Sender zur Erzeugung einer HF-Hintergrundstrahlung auf, falls in abgeschirmten Räumen gearbeitet werden muß, in denen eine Hintergrundstrahlung nicht in ausreichender Stärke zur Verfügung steht. Der HF-Sender ist bevorzugt mit einer größeren Rahmenantenne von z. B. 150 cm x 150 cm ausgebildet.

Die metallischen Objekte die mit diesem Verfahren und der Vorrichtung geortet werden können, sind unterschiedlichster Natur. Es kann sich dabei beispielsweise um Bewehrungsstäbe, drahtgebundene Abhöranlagen, Minisender, elektrische Zünder und Sprengvorrichtungen handeln. Bei Bewehrungsgittern und engmaschigen Metallkonstruktionen ist insbesondere ein Abscannen und eine Aufzeichnung und Visualisierung auf dem Computer günstig, so daß die Bewehrung sichtbar gemacht werden kann und auch zur Unterscheidung dazu, einzelne Drähte, die auf diesem Bewehrungsgitter verlaufen, detektiert werden können.

Nachfolgend wird die Erfindung anhand eines in der Zeichnung dargestellten bevorzugten Ausführungsbeispiels weiter erläutert. Im einzelnen zeigen die schematischen Darstellungen in:
- Fig. 1: eine erfindungsgemäße Vorrichtung zur Detektion von metallischen Objekten;
- Fig. 2: eine alternative Ausführungsform einer erfindungsgemäßen Vorrichtung zur Detektion eines metallischen Objekts, und
- Fig. 3: eine Darstellung eines zusätzlichen HF-Senders.

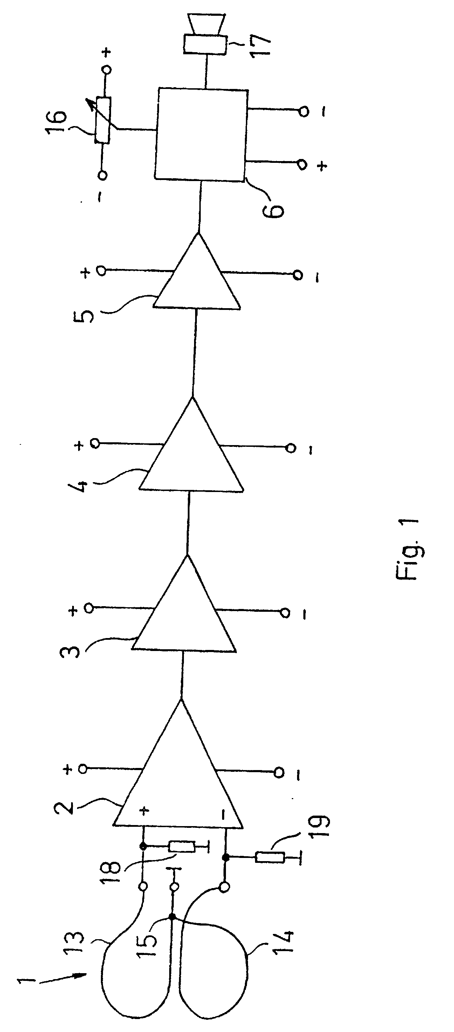

In Figur 1 sind die mit 1 bezeichneten Empfangsschleifen dargestellt, die in Differenz geschaltet sind. Die Empfangsschleifen bestehen aus zwei acht-förmig angeordneten Leiterschleifen 13 und 14 mit einem gemeinsamen Massepunkt 15. Die beiden Leiterschleifen 13 und 14 werden auf einen positiven und negativen Eingang eines differenzierenden Hochfrequenzverstärkers 2 gegeben. Über Widerstände 18 und 19 erfolgt eine Erdung der Leiterschleifen 13 und 14. Die Differenzbildung ist notwendig, um ein Störsignal zu unterdrücken, welches sich sonst aus der HF-Hintergrundstrahlung ergeben würde. Durch die Differenzbildung der Signale der räumlich getrennt angeordneten Leiterschleifen 13 und 14 wird die gleichmäßige Komponente der HF-Hintergrundstrahlung eliminiert und bei der Differenzbildung verbleibt lediglich ein Anteil der vom gesuchten Objekt abgestrahlten Strahlung, da diese von einem nahegelegenen Punkt ausgeht und deshalb nicht gleichförmig die beiden geometrisch entkoppelten Leiterschleifen 13 und 14 erreicht. Ein nicht dargestelltes Netzteil erzeugt eine positive Spannung und eine negative Spannung und stellt eine Erdung bereit, mit der die einzelnen Komponenten versorgt werden. Bei dem Hochfrequenzverstärker 2 sind schematisch die Anschlüsse für die positive und die negative Versorgungsspannung dargestellt. Dem differenzierenden Hochfrequenzverstärker 2 ist ein weiterer Hochfrequenzverstärker 3 nachgeschaltet, dessen Dynamikbereich logarithmisch ausgebildet ist, damit starke Empfangssignale nicht bis in einen Sättigungsbereich verstärkt werden und dadurch die Auswertung behindern würden. Das so verstärkte Signal wird einem Hochfrequenzgleichrichter 4 zugeführt, wobei das von diesem erzeugte Gleichspannungssignal einem Gleichspannungsverstärker 5 zugeführt wird. Die Tonumsetzung 6 empfängt das vom Gleichspannungsverstärker 5 verstärkte Signal und ordnet diesem ein akustisches Signal zu, welches über einen Lautsprecher 17 wiedergegeben wird. Die Tonumsetzung 6 ist über ein Potentiometer 16 regulierbar, so daß in Abhängigkeit von den detektierten Frequenzen die Tonumsetzung 6 so angepaßt werden kann, daß ein akustisches Signal in einem gut wahrnehmbaren Bereich abgegeben wird.

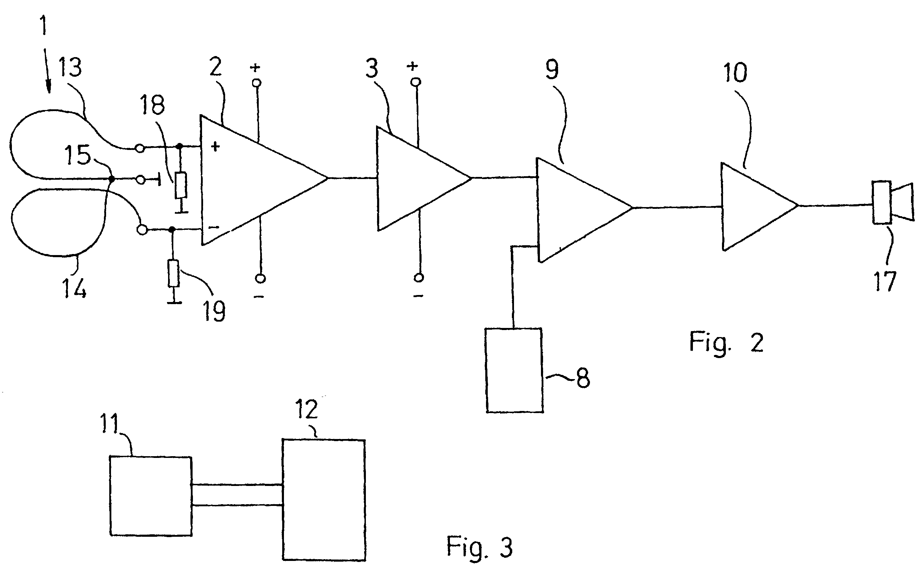

In Fig. 2 ist eine alternative Ausführungsform dargestellt, wobei die Empfangsschleifen 1, der differenzierende Hochfrequenzverstärker 2 und der Hochfreqenzverstärker 3 mit dem logarithmischen Verstärkungsbereich ähnlich zu den in Figur 1 beschriebenen sind. Im Unterschied zur Ausführungsform in Fig. 1 folgt dem Hochfrequenzverstärker 3 eine Mischstufe 9, die einerseits das Signal des Hochfrequenzverstärkers 3 und andererseits eine hohe Frequenz eines Wobbelgenerators 8 erhält. In der Mischstufe 9 werden in bekannter Weise zwei hochfrequente Schwingungen überlagert, so daß sich eine niederfrequente Schwingung ergibt, die auch Schwebung genannt wird. Der Wobbelgenerator 8 erzeugt eine Vielzahl von Frequenzen, so daß bei jedem Wobbelhub auch eine passende Frequenz erzeugt wird, mit der eine darstellbare Schwebung erzeugt wird. Der Mischstufe 9 folgt ein Niederfrequenzverstärker 10. Das so verstärkte Signal wird dann von einem Lautsprecher 17 dargestellt.

In Fig. 3 ist ein zusätzlicher HF-Sender 11 mit einer daran angeschlossenen Rahmenantenne 12 dargestellt. Der Sender 11 kann mit einer geringen Leistung von 10 mW betrieben werden, die über die Rahmenantenne mit Abmessungen in der Größenordnung von zirka 150 cm x 150 cm abgestrahlt wird. Der HF-Sender 11 kann immer dann angewendet werden, wenn die Signalintensität verbessert werden soll. Dies insbesondere dann, wenn die Suche in abgeschlossenen Räumen durchgeführt werden soll, die durch bauliche Stahlkonstruktionen abgeschirmt sind. Der Sender wird günstigerweise im Frequenzbereich von 500 KHz bis 250 MHz betrieben. Bei einer Modulation der vom HF-Sender 11 und der Rahmenantenne 12 abgestrahlten Frequenz kann die Mischstufe 9 mit einer beliebigen Frequenz aus dem Wobbelgenerator 8 beaufschlagt werden, wobei sich immer ein gut hörbares niederfrequentes Signal ergibt.

## Patentansprüche

1. Verfahren zur passiven Detektion eines metallischen Objekts, insbesondere eines Drahtes,
bei dem von dem metallischen Objekt unter Nutzung einer vorhandenen HF-Hintergrundstrahlung ein Spektrum hoher Frequenzen empfangen und abgestrahlt wird,
bei dem die von dem metallischen Objekt abgestrahlten hohen Frequenzen mit mindestens zwei Empfangsschleifen detektiert werden,
bei dem aus den von den Empfangsschleifen empfangenen Signalen zur Störsignalunterdrückung ein Differenzsignal gebildet wird und
bei dem das hochfrequente Differenzsignal ausgewertet und zur Anzeige gebracht wird.

2. Verfahren nach Anspruch 1,
wobei
das hochfrequente Differenzsignal gleichgerichtet wird und
ein so erzeugtes Gleichspannungssignal zur Anzeige gebracht wird.

3. Verfahren nach Anspruch 1,
wobei
dem hochfrequenten Differenzsignal mindestens
eine hohe Frequenz beigemischt wird, so daß eine niederfrequente Schwebung entsteht und
die niederfrequente Schwebung zur Anzeige gebracht wird.

4. Verfahren nach einem der vorhergehenden Ansprüche,
wobei
das ausgewertete Differenzsignal mit einer akustischen Anzeige dargestellt wird.

5. Verfahren nach einem der vorhergehenden Ansprüche,
wobei
ein zusätzlicher HF-Sender zur Erzeugung der HF-Hintergrundstrahlung innerhalb eines Empfangsbereichs des metallischen Objekts betrieben wird, und die vom HF-Sender erzeugte HF-Hintergrundstrahlung moduliert wird.

6. Verfahren nach einem der vorhergehenden Ansprüche,
wobei
zur Detektion eines Objektes in einem definierten Bereich, dieser definierte Bereich abgescannt wird und die aufgenommenen Differenzsignale abgespeichert und dargestellt werden.

7. Vorrichtung zur passiven Detektion eines metallischen Objekts, insbesondere eines Drahtes,
mit Empfangsschleifen und einer nachgeschalteten Auswerteelektronik, insbesondere zur Durchführung des Verfahrens nach einem der Ansprüche 1 bis 6,
wobei
- mindestens zwei Empfangsschleifen (1) vorhanden sind, mit denen ein vom Objekt abgestrahltes Spektrum hoher Frequenzen detektierbar ist,
- die zwei Empfangsschleifen (1) an den Eingang eines Hochfrequenzverstärkers (2) geschaltet sind, daß am Ausgang des Hochfrequenzverstärkers (2) das verstärkte Differenzsignal der beiden Empfangsschleifen (1) liegt,
- dem Hochfrequenzverstärker (2) ein Hochfrequenzgleichrichter (4) nachgeordnet ist, mit dem ein Gleichspannungssignal erzeugbar ist, und
- eine Schaltung zur Signalumsetzung vorhanden ist, die dem Gleichspannungssignal ein akustisches und/oder optisches Signal zuordnet.

8. Vorrichtung nach Anspruch 7,
wobei daß dem Hochfrequenzgleichrichter (4) zur Verstärkung des Gleichspannungssignals ein Gleichspannungsverstärker (5) nachgeordnet ist.

9. Vorrichtung nach einem der Ansprüche 7 oder 8,
wobei
daß die Schaltung zur Signalumsetzung eine mit einem Potentiometer (16) verbundene Tonumsetzung (6) und eine akustische Anzeigeeinrichtung aufweist.

10. Vorrichtung zur passiven Detektion eines metallischen Objekts, insbesondere eines Drahtes,
mit Empfangsschleifen und einer nachgeschalteten Auswerteelektronik, insbesondere zur Durchführung des Verfahrens nach einem der Ansprüche 1 bis 6,
wobei
- mindestens zwei Empfangsschleifen (1) vorhanden sind, mit denen ein vom Objekt abgestrahltes Spektrum hoher Frequenzen detektierbar ist,
- die zwei Empfangsschleifen (1) an den Eingang eines Hochfrequenzverstärkers (2) geschaltet sind, daß am Ausgang des Hochfrequenzverstärkers (2) das verstärkte Differenzsignal der beiden Empfangsschleifen (1) liegt,
- zur Verstärkung eines so gebildeten Differenzsignals ein Hochfrequenzverstärker (2) vorhanden ist,
- eine Mischstufe (9) zur Überlagerung des verstärkten Hochfrequenzsignals mit mindestens einer weiteren hohen Frequenz zur Erzeugung einer niederfrequenten Schwebung vorhanden ist, und
- eine akustische und/oder optische Anzeigeeinrichtung vorhanden ist.

11. Vorrichtung nach Anspruch 10,
wobei
die Mischstufe (9) von einem Wobbelgenerator (8) beaufschlagt ist, und
ein Niederfrequenzverstärker (10) zur Verstärkung der Schwebung vorhanden ist.

12. Vorrichtung nach einem der Ansprüche 10 oder 11,
wobei
die Empfangsschleifen (1) achtförmig angeordnet sind und einen gemeinsamen Massepunkt (15) aufweisen, und die Empfangsschleifen (1) als Breitbandempfänger ausgelegt sind.

13. Vorrichtung nach einem der Ansprüche 10 bis 12,
wobei
hinter dem Hochfrequenzverstärker (2) zur Verstärkung des Differenzsignals ein zweiter Hochfrequenzverstärker (3) angeschlossen ist, und
der zweite Hochfrequenzverstärker (3) mit einem logarithmischen Dynamikbereich ausgebildet ist.

14. Vorrichtung nach einem der Ansprüche 10 bis 13,
wobei
ein HF-Sender (11) zur Erzeugung einer HF-Hintergrundstrahlung vorhanden ist, und
der HF-Sender (11) eine Rahmenantenne (12) aufweist.

15. Vorrichtung nach einem der Ansprüche 10 bis 14,
wobei
der den Empfangsschleifen (1) nachgeordnete Hochfrequenzverstärker (2) als Differenzverstärker ausgebildet ist.

16. Vorrichtung nach einem der Ansprüche 10 bis 14,
wobei
die Empfangsschleifen (1) gegensinnig zueinander geschaltet sind.

## Claims

1. Method for the passive detection of a metallic object, particularly a wire, in which, using a HF background radiation present, a spectrum of high frequencies is received and emitted by the metallic object, in which the high frequencies emitted by the metallic object are detected with at least two receiving loops, in which a differential signal is formed from the signals received by the receiving loops for interference signal suppression and in which a high frequency differential signal is evaluated and displayed.

2. Method according to claim 1, wherein the high frequency differential signal is rectified and a thus generated d.c. voltage signal is displayed.

3. Method according to claim 1, wherein to the high frequency differential signal is added at least one high frequency, so that a low frequency beat occurs and the low frequency beat is displayed.

4. Method according to one of the preceding claims, wherein the evaluated differential signal is displayed with an acoustic indication.

5. Method according to one of the preceding claims, wherein an additional HF transmitter for producing the HF background radiation is operated within a receiving range of the metallic object and the HF background radiation produced by the HF transmitter is modulated.

6. Method according to one of the preceding claims, wherein for the detection of an object in a defined range, said defined range is scanned and the recorded differential signals are stored and displayed.

7. Apparatus for the passive detection of a metallic object, particularly a wire, with receiving loops and a downstream evaluation electronics, particularly for performing the method according to one of the claims 1 to 6, wherein at least two receiving loops (1) are present with which a high frequency spectrum emitted by the object can be detected and the two receiving loops (1) are connected to the input of a high frequency amplifier (2) and at the output of the high frequency amplifier (2) is present the amplified differential signal of the two receiving loops (1), the high frequency amplifier (2) is followed by a high frequency rectifier (4) with which a d.c. voltage signal can be generated and wherein a signal conversion circuit is present which assigns an acoustic and/or optical signal to the d.c. voltage signal.

8. Apparatus according to claim 7, wherein a d.c. voltage amplifier (5) follows the high frequency rectifier (4) for the amplification of the d.c. voltage signal.

9. Apparatus according to one of the claims 7 or 8, wherein the signal conversion circuit has a sound converter (6) connected to a potentiometer (16) and an acoustic indicating device.

10. Apparatus for the passive detection of a metallic object, particularly a wire, with receiving loops and a downstream evaluation electronics, particularly for performing the method according to one of the claims 1 to 6, wherein there are at least two receiving loops (1) with which it is possible to detect a high frequency spectrum emitted by the object, the two receiving loops (1) are connected to the input of a high frequency amplifier (2) and at the output of the high frequency amplifier (2) is present the amplified differential signal of the two receiving loops (1), for amplifying a differential signal formed in this way a high frequency amplifier (2) is present, a mixing stage (9) is provided for heterodyning the amplified high frequency signal with at least one further high frequency for producing a low frequency beat and an acoustic and/or optical indicating device is present.

11. Apparatus according to claim 10, wherein the mixing stage (9) is subject to the action of a sweep signal generator (8) and there is a low frequency amplifier (10) for amplifying the beat.

12. Apparatus according to one of the claims 10 or 11, wherein the receiving loops (1) are arranged in eight form and have a common earth point (15) and the receiving loops (1) are designed as broad-band receivers.

13. Apparatus according to one of the claims 10 to 12, wherein behind the high frequency amplifier (2) for amplifying the differential signal is connected a second high frequency amplifier (3), which is constructed with a logarithmic dynamic range.

14. Apparatus according to one of the claims 10 to 13, wherein a HF transmitter (11) is provided for producing HF background radiation and the HF transmitter (11) has a frame antenna (12).

15. Apparatus according to one of the claims 10 to 14, wherein the high frequency amplifier (2) downstream of the receiving loops (1) is constructed as a differential amplifier.

16. Apparatus according to one of the claims 10 to 14, wherein the receiving loops (1) are counterconnected.

## Revendications

1. Procédé de détection passive d'un objet métallique, en particulier d'un fil métallique,
dans lequel un spectre haute fréquence est reçu et rayonné par l'objet métallique en utilisant un rayonnement de fond haute fréquence existant,
dans lequel les hautes fréquences rayonnées par l'objet métallique sont détectées avec au moins deux boucles réceptrices,
dans lequel un signal différentiel est formé à partir des signaux reçus par les boucles réceptrices afin de réduire les signaux parasites, et
dans lequel le signal différentiel à haute fréquence est exploité et notifié.

2. Procédé selon la revendication 1, dans lequel le signal différentiel à haute fréquence est redressé et un signal de tension continue ainsi produit est notifié.

3. Procédé selon la revendication 1, dans lequel au moins une haute fréquence est mélangée au signal différentiel à haute fréquence, de façon qu'il se forme un pleurage basse fréquence, et le pleurage basse fréquence est notifié.

4. Procédé selon l'une des revendications précédentes, dans lequel le signal différentiel analysé est représenté avec une notification acoustique.

5. Procédé selon l'une quelconque des revendications précédentes, dans lequel un émetteur haute fréquence supplémentaire est utilisé pour produire le rayonnement de fond haute fréquence dans une zone de réception de l'objet métallique, et le rayonnement de fond haute fréquence produit par l'émetteur haute fréquence est modulé.

6. Procédé selon l'une quelconque des revendications précédentes, dans lequel, pour détecter un objet dans une zone définie, cette zone définie est parcourue et les signaux différentiels relevés sont enregistrés et représentés.

7. Dispositif de détection passive d'un objet métallique, en particulier d'un fil métallique, avec des boucles réceptrices et une électronique d'analyse placée en aval, en particulier pour mettre en oeuvre le procédé selon l'une quelconque des revendications 1 à 6, dans lequel
- au moins deux boucles réceptrices (1) sont présentes, avec lesquelles un spectre haute fréquence rayonné par l'objet peut être détecté,
- les deux boucles réceptrices (1) sont montées à l'entrée d'un amplificateur haute fréquence (2),
- le signal différentiel amplifié des deux boucles réceptrices (1) est présent à la sortie de l'amplificateur haute fréquence (2),
- l'amplificateur haute fréquence (2) est suivi d'un redresseur haute fréquence (4) avec lequel un signal de tension continue peut être produit, et
- un circuit de conversion de signal est présent, qui associe au signal de tension continue un signal acoustique et/ou optique.

8. Dispositif selon la revendication 7, dans lequel le redresseur haute fréquence (4) est suivi d'un amplificateur de tension continue (5) pour amplifier le signal de tension continue.

9. Dispositif selon l'une quelconque des revendications 7 ou 8, dans lequel le circuit de conversion de signal comporte une conversion sonore (6) reliée à un potentiomètre (16) et un dispositif de notification acoustique.

10. Dispositif de détection passive d'un objet métallique, en particulier d'un fil métallique, avec des boucles réceptrices et une électronique d'analyse placée en aval, en particulier pour conduire le procédé selon l'une des revendications 1 à 6, dans lequel
- au moins deux boucles réceptrices (1) sont présentes, avec lesquelles un spectre haute fréquence rayonné par l'objet peut être détecté,
- les deux boucles réceptrices (1) sont montées à l'entrée d'un amplificateur haute fréquence (2),
- le signal différentiel amplifié des deux boucles réceptrices (1) est présent à la sortie de l'amplificateur haute fréquence (2),
- un amplificateur haute fréquence (2) est présent pour amplifier un signal différentiel ainsi formé,
- un étage de mélange (9) est présent pour superposer le signal haute fréquence amplifié avec au moins une autre haute fréquence pour produire un pleurage basse fréquence, et
- un dispositif de notification acoustique et/ou optique est présent.

11. Dispositif selon la revendication 10, dans lequel l'étage de mélange (9) est chargé par un générateur de balayage (8), et
un amplificateur basse fréquence (10) est présent pour amplifier le pleurage.

12. Dispositif selon l'une quelconque des revendications 10 ou 11, dans lequel les boucles réceptrices (1) sont disposées en forme de huit et présentent un point de masse (15) commun, et les boucles réceptrices (1) sont conformées en récepteurs à bande large.

13. Dispositif selon l'une quelconque des revendications 10 à 12, dans lequel un deuxième amplificateur haute fréquence (3) est monté derrière l'amplificateur haute fréquence (2) pour amplifier le signal différentiel, et le deuxième amplificateur haute fréquence (3) est réalisé avec une plage dynamique logarithmique.

14. Dispositif selon l'une quelconque des revendications 10 à 13, dans lequel un émetteur haute fréquence (11) est présent pour produire un rayonnement de fond haute fréquence, et
l'émetteur haute fréquence (11) comporte une antenne cadre (12).

15. Dispositif selon l'une quelconque des revendications 10 à 14, dans lequel l'amplificateur haute fréquence (2) placé après les boucles réceptrices (1) est conformé en amplificateur différentiel.

16. Dispositif selon l'une quelconque des revendications 10 à 14, dans lequel les boucles réceptrices (1) sont montées en sens inverse l'une de l'autre.
